Europäisches Patentamt

European Patent Office

Office européen des brevets

(11) Veröffentlichungsnummer: **0 365 699**
**A1**

## (12) EUROPÄISCHE PATENTANMELDUNG

(21) Anmeldenummer: **88117798.4**

(51) Int. Cl.5: **G06F 15/20**

(22) Anmeldetag: **26.10.88**

(43) Veröffentlichungstag der Anmeldung:
**02.05.90 Patentblatt 90/18**

(84) Benannte Vertragsstaaten:
**DE FR GB NL**

(71) Anmelder: **Reuting, Hans-Werner, Dipl.-Ing.**
**Tilsiter Strasse 12**
**D-3150 Peine(DE)**

(72) Erfinder: **Reuting, Hans-Werner, Dipl.-Ing.**
**Tilsiter Strasse 12**
**D-3150 Peine(DE)**

(74) Vertreter: **Lins, Edgar, Dipl.-Phys. et al**
**Patentanwälte Gramm + Lins**
**Theodor-Heuss-Strasse 2**
**D-3300 Braunschweig(DE)**

(54) Verfahren zur elektronischen Verarbeitung von Textinformationen.

(57) Bei einem Verfahren zur elektronischen Verarbeitung von Textinformationen in einem Datenverarbeitungsgerät mit Bildschirm bei dem der eingegebene Text Verarbeitungsstufen wie Setzen, Silbentrennung usw. unterworfen, auf dem Bildschirm zur Durchführung eventueller Korrekturen dargestellt, abgespeichert und ggf. ausgegeben wird, läßt sich eine Störung der Bedienperson das Datenverarbeitungsgerätes durch Worttrennung, Zeilen- und Seitenumbruchvorgänge, insbesondere bei der Durchführung von Änderungen eines bereits geschriebenen Textes vermeiden, wenn der eingegebene Text ohne vorhergehende Verarbeitungsschritte als Fließtext abgespeichert wird und daß die Verabeitungsschritte erst vor dem Ausgeben vorgenommen werden.

EP 0 365 699 A1

## Verfahren zur elektronischen Verarbeitung von Textinformationen

Die Erfindung betrifft ein Verfahren zur elektronischen Verarbeitung von Textinformationen in einem Datenverarbeitungsgerät mit Bildschirm, bei dem der eingegebene Text Verarbeitungsstufen wie Setzen, Silbentrennung usw. unterworfen, auf dem Bildschirm zur Durchführung eventueller Korrekturen dargestellt, abgespeichert und ggf. ausgegeben wird.

Bei üblichen Textverarbeitungssystemen wird der Text so eingegeben und auf dem Bildschirm dargestellt, wie das Druckbild es verlangt, d.h. mit Zeilen- und Seitenumbruch. Manche Textverarbeitungsprogramme nehmen den zeilenumbruch automatisch vor und machen Vorschläge für die Silbentrennung, die dann der Überprüfung bedürfen. Um die Länge der Zeile nicht zu beeinflussen, sind Druckerbefehle häufig eliminiert und müssen zwecks Überprüfung oder Korrektur durch besondere Maßnahmen sichtbar gemacht werden. Beim Einfügen und Löschen von Textstellen oder beim Umsetzen ganzer Abschnitte müssen Zeilen- und Seitenumbruch überprüft und ggf. korrigiert werden. Insbesondere können dabei Trennstriche vom Zeilenende in die Zeile hineingeraten, so daß sie entfernt werden müssen. Ggf. sind alle Seitenumbrüche von der Korrekturstelle ab zu entfernen und neu zu markieren.

Der vorliegenden Erfindung liegt die Erkenntnis zugrunde, daß die Texteingabe bei den bekannten Textverarbeitungsprogrammen, besonders im Fall von Textänderungen, aufwendig, unübersichtlich, verwirrend und zeitraubend ist.

Der Erfindung liegt die Aufgabe zugrunde, ein Verfahren zur elektronischen Verarbeitung von Textinformationen der angegebenen Art so auszubilden, daß die Texteingabe wesentlich vereinfacht wird.

Diese Aufgabe wird erfindungsgemäß bei einem Verfahren der eingangs erwähnten Art dadurch gelöst, daß der eingegebene Text ohne vorhergehende Verarbeitungsschritte als Fließtext abgespeichert wird und daß die Verabeitungsschritte erst vor dem Ausgeben vorgenommen werden.

Bei dem erfindungsgemäßen Verfahren wird der Text als Fließtext abgespeichert, so daß er für spätere Änderungen in gleicher Weise zu Verfügung steht. Erst vor dem Ausgeben der Textes, beispielsweise durch das Ausdrucken, werden die Verarbeitungsschritte vom Programm vorgenommen.

Mit der Erfindung wird daher der Vorteil erzielt, daß das Eingeben des Textes und evtl. Änderungen ohne Rücksicht auf Zeilen- und Seitenumbrüche erfolgen können und die Bedienperson durch solche Verarbeitungsschritte nicht abgelenkt wird.

Das erfindungsgemäße Verfahren ist besonders effectiv, wenn der eingegebene Text in einer ungewohnten Darstellung auf dem Bildschirm wiedergegeben wird, so daß er ohne Rücksicht auf die Zeilenlänge eingegeben wird. Bei Erreichen des Zeilenendes wird ein Wort vorzugsweise ohne Beachtung von Trennregeln auf der nächsten Zeile fortgesetzt. Diese Darstellungsweise hat den Vorteil, daß sehr schnell fortlaufend geschrieben werden kann und bei Korrekturen, insbesondere Einfügungen und Löschungen keinerlei zusätzliche Arbeiten, wie Zeilen- und Seitenumbruch, Einfügen von Trennstrichen oder Prüfen und Korrigieren von Trennvorschlägen erforderlich sind. Die Darstellung auf dem Bildschirm beim Einfügen und Löschen von Zeichen wird beruhigt, weil bei der Einfügung von einem Zeichen sich die betreffende Zeile und die nachfolgenden Zeilen um nur je ein Zeichen bis zum Absatzende verschieben, während bei den bekannten Verfahren in mehreren Folgezeilen ganze Worte oder Wortteile vom Zeilenende an den Anfang der nächsten Zeile und umgekehrt umspringen, wobei immer wieder neue Trennvorschläge entstehen.

Das erfindungsgemäße Verfahren kann aber auch so ausgestaltet werden, daß auf dem Bildschirm in Anpassung an die dort vorgegebene Zeilenlänge ganz unabhängig von den späteren Verarbeitungsschritten für die Ausgabe ein Zeilenumbruch ggf. mit Silbentrennung erfolgt. Man vermeidet damit den ungewohnten Übergang in die nächste Zeile. Eine Überprüfung der Trennvorschläge und evtl. in der Zeile stehenden Trennstriche ist nicht erforderlich, weil sie für den späteren Ausgabevorgang ohne Bedeutung sind. Die auf dem Bildschirm sichtbare Zeilenlänge kann völlig unabhängig von der Zeilenlänge bei der Ausgabe, beispielsweise der Druckzeilenlänge, sein.

Die vom Druckbild unabhängige Darstellung auf dem Bildschirm bietet den weiteren Vorteil, daß Druckbefehle im Text stehen können, daß eine praktische unbegrenzte Vielfalt von Schrifttypen und -größen mit den unterschiedlichsten Zeilenabständen, sowie beliebige Papierformate ohne zusätzliche Anforderungen zur Anwendung kommen und innerhalb desselben Textes beliebig oft wechseln können. Ein weiterer Vorteil besteht darin, daß das Verfahren auch bei Tabellen angewendet werden kann, deren Aufbau und Gestaltung sich dadurch in ganz bezonderem Maße vereinfacht, indem sich die Bedienperson nicht im die Einordnung des Textes in die einzelnen Spalten zu kümmern braucht.

Die Darstellung des Textes auf dem Bildschirm geschieht vorzugsweise mit Einheitstypen, einer Einheits-Zeilenlänge und einem Einheits-Zeilenabstand, da diese Darstellung unabhängig vom Druckbild ist.

Durch die sichtbare Darstellung von Druckerbefehlen auf dem Bildschirm im Fließtext können diese leicht überprüft, korrigiert und ggf. gelöscht werden, da sie ebenso leicht auffindbar und korrigierbar sind wie der Text selbst. Die Druckerbefehle können sich auf ein Minimum beschränken, da insbesondere auf Befehle für Zeilen- und Seitenumbruch verzichtet werden kann. Die Darstellung der Druckerbefehle auf dem Bildschirm ist beim erfindungsgemäßen Verfahren unproblematische, weil die dadurch erzeugte Verlängerung einer Zeile nicht stört. Für das Ausgeben normaler Brieftexte o. ä. werden diese Druckerbefehle selbstverständlich unterdrückt.

Die mit der Erfindung erzielbare Vereinfachung der Texteingabe und Textverarbeitung führt zwangsläufig zu einer erheblichen Steigerung der Schreib- und Bearbeitungsgeschwindkeit. Da zahlreiche zusätzliche Operationen nicht von der Bedienperson ausgeführt werden müssen, ist die Handhabung auch besonders leicht erlernbar.

Bei dem erfindungsgemäßen Verfahren werden die zahlreichen zusätzlichen Operationen erst unmittelbar vor der Ausgabe, beispielsweise dem Druck, einer Zwischenspeicherung des druckfertigen Textes oder eines Aussendens innerhalb eines Datenkommunikationssystems ausgeführt, was allerdings zuverlässige Programme erfordert, damit das Auftreten von Fahlern auf eine äußerstes Minimum beschränkt bleibt. Ferner ist es zweckmäßig, das Programm für den Seitenumbruch so zu ergänzen, däß nicht auf einem Seitenende oder -anfang unsinnig oder auch nur unschön kurze Texte erscheinen, wie etwa eine einzelne Überschrift unten und eine Grußformel bzw. ein Anlagenverzeichnis oben auf einer Seite. Derartige Programme stehen allerdings zur Verfügung oder sind ohne Schwierigkeiten erstellbar.

## Ansprüche

1. Verfahren zur elektronischen Verarbeitung von Textinformationen in einem Datenverarbeitungsgerät mit Bildschirm bei dem der eingegebene Text Verarbeitungsstufen wie Setzen, Silbentrennung usw. unterworfen, auf dem Bildschirm zur Durchführung eventueller Korrekturen dargestellt, abgespeichert und ggf. ausgegeben wird, dadurch gekennzeichnet, daß der eingegebene Text ohne vorhergehende Verarbeitungsschritte als Fließtext abgespeichert wird und daß die Verarbeitungsschritte erst vor dem Ausgeben vorgenommen werden.

2. Verfahren nach Anspruch 1, dadurch gekennzeichnet, daß der Text auf dem Bildschirm mit auf dessen Abmessungen abgestimmter Zeilenlänge als Fließtext dargestellt wird.

3. Verfahren nach Anspruch 1, dadurch gekennzeichnet, daß die Darstellung auf dem Bildschirm mit herkömmlichen Zeilenumbrüchen erfolgt.

4. Verfahren nach einem der Ansprüche 1 bis 3, dadurch gekennzeichnet, daß die Darstellung auf dem Bildschirm mit einem Einheits-Zeichensatz, einer Einheits-Zeilenlänge und mit einem Einheits-Zeilenabstand vorgenommen wird.

5. Verfahren nach einem der Ansprüche 1 bis 4, dadurch gekennzeichnet, daß Druckerbefehle in dem auf dem Bildschirm dargestellten Text erscheinen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 145 888 (MARTIN) <br> * Seite 1, Zeile 1 - Seite 2, Zeile 5; Seite 12, Zeile 9 - Seite 13, Zeile 4; Seite 26, Zeile 2 - Seite 31, Zeile 6; Figur 1 * <br> --- | 1 | G 06 F 15/20 |
| A | US-A-4 209 784 (SUMNER) <br> * Spalte 1, Zeile 12 - Spalte 3, Zeile 67; Zusammenfassung * <br> --- | 1 | |
| A | EP-A-0 062 121 (MADDOCK) <br> * Seite 3, Zeilen 15-26; Seite 4, Zeile 20 - Seite 5, Zeile 10; Seite 8, Zeile 1 - Seite 9, Zeile 20; Figuren 1,3 * <br> ----- | 1 | |

**RECHERCHIERTE SACHGEBIETE (Int. Cl.5)**

G 06 F 15/20

Der vorliegende Recherchenbericht wurde für alle Patentansprüche erstellt

| Recherchenort | Abschlußdatum der Recherche | Prüfer |
|---|---|---|
| DEN HAAG | 19-06-1989 | CHUGG D.J. |